# FASCICULE DE BREVET EUROPEEN

(11) **EP 2 318 261 B1**
(45) Date de publication et mention de la délivrance du brevet: **08.02.2012**
(21) Numéro de dépôt: 09737066.2
(22) Date de dépôt: 16.07.2009
(51) Int. Cl.: B62D 5/04

(54) **SYSTÈME DE DIRECTION ASSISTÉE DE VÉHICULE AUTOMOBILE**
SERVOLENKSYSTEM FÜR EIN KRAFTFAHRZEUG
POWER ASSISTED STEERING SYSTEM FOR AN AUTOMOBILE

(30) Priorité: 03.09.2008 FR 0804828
(43) Date de publication de la demande: 11.05.2011
(73) Titulaire: JTEKT Europe, 69540 Irigny (FR)
(72) Inventeur: PILAZ, Pierre, F-69170 Saint Marcel L'Eclaire (FR); CASSAR, Stéphane, F-69300 Caluire (FR); MOULAIRE, Pascal, F-42300 Roanne (FR)
(74) Mandataire: Maureau, Philippe
(86) Numéro de dépôt international: PCT/FR2009/051412
(87) Numéro de publication internationale: WO 2010/026320

(56) Documents cités:
- EP-A- 1 878 638
- FR-A- 2 811 628
- US-A1- 2007 043 490
- US-B1- 6 250 419

## Description

La présente invention concerne un système de direction assistée, par exemple électrique, de véhicule automobile.

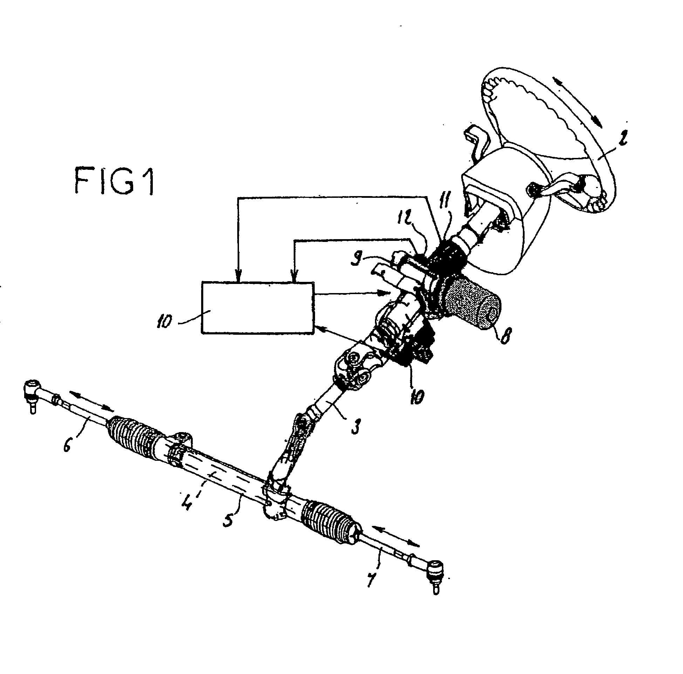

La figure 1 rappelle quels sont les principaux éléments composant un système de direction assistée, par exemple électrique, de véhicule automobile. Une telle direction comprend, d'une part, une partie mécanique comprenant un volant de conduite 2 lié en rotation à une colonne de direction 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche (non représentées) du véhicule. La direction comprend, pour assister l'effort manuel exercé par le conducteur du véhicule sur le volant 2, un moteur électrique d'assistance 8 à deux sens de rotation. L'arbre de sortie du moteur d'assistance est accouplé, par l'intermédiaire d'un réducteur de vitesse 9 notamment à vis sans fin et roue tangente ou à train d'engrenages, à la colonne de direction 3 ou au pignon de direction ou à la crémaillère 4 directement, de manière à transmettre un couple moteur (éventuellement aussi un couple résistant) à cet élément. Le moteur électrique d'assistance 8 est piloté par un calculateur électronique embarqué 10, qui reçoit et traite divers signaux, en provenance de capteurs.

Dans une réalisation habituelle, le calculateur électronique 10 reçoit notamment un signal électrique issu d'un capteur de couple 11 placé sur la colonne de direction 3, et mesurant ainsi le couple exercé par le conducteur sur le volant 2, et un signal électrique issu d'un capteur de vitesse 12 du véhicule.

A partir de ces diverses informations, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des "lois d'assistance" prédéfinies.

Il doit être noté que le capteur de couple utilisé dans un tel système de direction assistée est complexe à mettre en oeuvre et à étalonner.

Afin de remédier à ces inconvénients, il est connu, notamment par le document de brevet US 6 250 419, de réaliser un système de direction assistée sans capteur de couple.

Cependant, un tel système de direction assistée est susceptible de provoquer des instabilités dans le pilotage du moteur d'assistance pouvant remettre en cause la sécurité du conducteur et des passagers d'un véhicule automobile équipé d'un tel système de direction assistée.

En effet, dans des conditions limites d'utilisation (par exemple dans des conditions de très faible adhérence, de changements très brusques d'adhérence du type plaque de verglas), le ressenti du conducteur du véhicule automobile, c'est-à-dire le couple devant être exercé par le conducteur sur le volant de conduite pour déplacer ce dernier, peut être incohérent avec la situation de conduite et donc perturber le conducteur. Cette perturbation peut entraîner des mouvements non souhaités du volant de conduite, et de ce fait remettre en cause la sécurité du conducteur et des éventuels passagers du véhicule automobile.

La présente invention vise principalement à fournir un système de direction assistée sans capteur de couple qui permette de maintenir cohérent le ressenti d'un conducteur d'un véhicule équipé de ce système avec la dynamique du véhicule.

A cet effet, la présente invention concerne un système de direction assistée de véhicule automobile comprenant :
- un moteur électrique d'assistance agencé pour assister l'effort manuel exercé par un conducteur sur le volant de conduite du véhicule automobile,
- des moyens de traitement agencés pour piloter le moteur électrique d'assistance,
- des moyens de calcul ou de mesure du couple d'assistance délivré par le moteur électrique d'assistance,
- des moyens de mesure de la position angulaire du moteur électrique d'assistance,
   caractérisé en ce que
   les moyens de traitement comprennent des moyens de détermination d'un signal de pilotage du moteur électrique d'assistance en fonction :
   - d'un premier signal de commande déterminé en fonction de la position angulaire du moteur électrique d'assistance,
   - d'un deuxième signal de commande déterminé en fonction :
      o de la mesure ou du calcul de l'accélération angulaire du moteur électrique d'assistance,
      o de la mesure ou du calcul du couple d'assistance délivré par le moteur électrique d'assistance.

La détermination du signal de pilotage du moteur électrique d'assistance à partir notamment des premier et deuxième signaux de commande définis ci-dessus permet de contrôler l'effort d'assistance fourni par le moteur électrique d'assistance de manière à faire tendre le ressenti du conducteur vers un ressenti normalement souhaité pour une situation dynamique donnée, sans nécessiter la présence d'un capteur de couple dédié.

Ainsi, le système de direction assistée selon l'invention permet de maintenir cohérent le ressenti d'un conducteur d'un véhicule équipé de ce système avec la dynamique du véhicule, donc de ne pas remettre en cause la sécurité du conducteur et des passagers du véhicule automobile.

Selon un mode de réalisation de l'invention, les moyens de détermination du signal de pilotage sont agencés pour nuancer la prise en compte du premier signal de commande ou du deuxième signal de commande en fonction des conditions de conduite.

Avantageusement, les moyens de traitement comprennent d'une part des moyens de comparaison de l'état dynamique théorique du moteur électrique d'assistance avec l'état dynamique réel du moteur électrique d'assistance déterminé à partir de la mesure ou du calcul de l'accélération angulaire du moteur électrique d'assistance et de la mesure ou du calcul du couple d'assistance délivré par le moteur électrique d'assistance, et d'autre part des moyens de calcul du deuxième signal de commande agencés pour calculer le deuxième signal de commande en fonction de la comparaison des états dynamiques théorique et réel du moteur électrique d'assistance.

De préférence, les moyens de traitement comprennent des premiers moyens de calcul agencés pour calculer, à partir de la comparaison de l'état dynamique théorique du moteur électrique d'assistance avec l'état dynamique réel du moteur électrique d'assistance, un signal représentatif de l'effort résistant à la crémaillère.

Selon un mode de réalisation de l'invention, les moyens de traitement comprennent des deuxièmes moyens de calcul agencés pour calculer, à partir de la comparaison de l'état dynamique théorique du moteur électrique d'assistance avec l'état dynamique réel du moteur électrique d'assistance, un signal représentatif de l'action du conducteur sur le volant de conduite du véhicule automobile. On entend par signal représentatif de l'action du conducteur sur le volant de conduite un signal représentatif du couple ou de l'effort de braquage exercé par le conducteur sur le volant de conduite, ou un signal représentatif du sens de braquage du volant de conduite.

Avantageusement, les moyens de calcul du deuxième signal de commande sont agencés pour calculer le deuxième signal de commande en fonction du signal représentatif de l'effort résistant à la crémaillère et du signal représentatif de l'action du conducteur sur le volant de conduite du véhicule automobile. Ces dispositions permettent d'améliorer le pilotage du moteur électrique d'assistance car les signaux représentatifs respectivement de l'effort résistant à la crémaillère et de l'action du conducteur sur le volant de conduite du véhicule automobile permettent d'une part de tenir compte de la dynamique du véhicule automobile, y compris dans des conditions limites d'utilisation, et d'autre part de tenir compte de l'action du conducteur sur le volant de conduite.

De préférence, les moyens de détermination du signal de pilotage du moteur électrique d'assistance sont agencés pour limiter la prise en compte du deuxième signal de commande de façon à maintenir le signal de pilotage dans un intervalle défini de part et d'autre de la valeur du premier signal de commande.

Selon un mode de réalisation de l'invention, le système de direction assistée comprend des moyens de mesure de vitesse agencés pour mesurer la vitesse longitudinale du véhicule automobile.

Avantageusement, les moyens de traitement comprennent des moyens de calcul du premier signal de commande agencés pour calculer le premier signal de commande en fonction de la position angulaire du moteur électrique d'assistance et de la vitesse longitudinale du véhicule automobile.

De préférence, les moyens de calcul du deuxième signal de commande sont agencés pour calculer le deuxième signal de commande en outre en fonction de la vitesse longitudinale du véhicule automobile.

De toute façon l'invention sera bien comprise à l'aide de la description qui suit en référence au dessin schématique annexé représentant, à titre d'exemple non limitatif, une forme d'exécution de ce système de direction assistée électrique.
La figure 1 (déjà mentionnée) est une vue en perspective, schématisée, d'un système de direction assistée électrique sur colonne de conception classique.
La figure 2 est une vue partielle schématisée sous forme de schéma-bloc d'un système de direction assistée électrique selon l'invention.

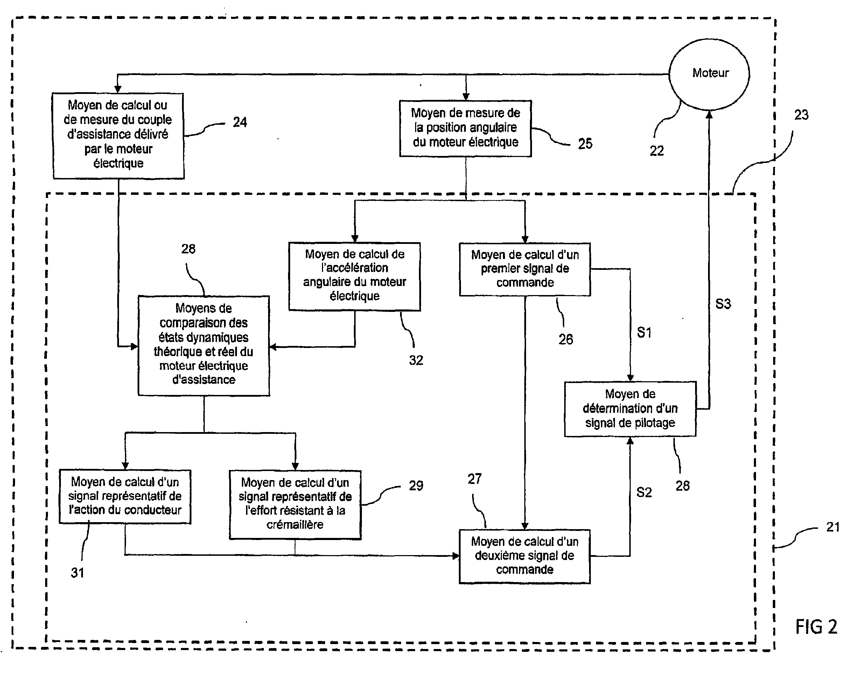

La figure 2 représente un système de direction assistée électrique 21 de véhicule automobile comprenant :
   - un moteur électrique d'assistance 22 agencé pour assister l'effort manuel exercé par un conducteur sur le volant de conduite du véhicule automobile,
   - une unité de traitement 23 agencée pour piloter le moteur électrique d'assistance,
   - des moyens de calcul ou de mesure 24 du couple d'assistance délivré par le moteur électrique d'assistance,
   - des moyens de mesure 25 de la position angulaire du moteur électrique d'assistance.

L'unité de traitement 23 comprend :
- des moyens de calcul 26 d'un premier signal de commande S1 agencés pour calculer le premier signal de commande en fonction de la position angulaire du moteur électrique d'assistance,
- des moyens de calcul 27 d'un deuxième signal de commande S2 agencés pour calculer le deuxième signal de commande,
- des moyens de détermination 28 d'un signal de pilotage S3 du moteur d'assistance en fonction du premier signal de commande S1 et du deuxième signal de commande S2.

L'unité de traitement 23 comprend en outre :
- des moyens de comparaison 28 de l'état dynamique théorique du moteur électrique d'assistance 22 avec l'état dynamique réel du moteur électrique d'assistance déterminé à partir de la mesure ou du calcul de l'accélération angulaire du moteur électrique d'assistance et de la mesure ou du calcul du couple d'assistance délivré par le moteur électrique d'assistance,
- des moyens de calcul 29 agencés pour calculer, à partir de la comparaison de l'état dynamique théorique du moteur électrique d'assistance avec l'état dynamique réel du moteur électrique d'assistance, un signal représentatif de l'effort résistant à la crémaillère,
- des moyens de calcul 31 agencés pour calculer, à partir de la comparaison de l'état dynamique théorique du moteur électrique d'assistance avec l'état dynamique réel du moteur électrique d'assistance, un signal représentatif de l'action du conducteur sur le volant de conduite du véhicule automobile, par exemple un signal représentatif de l'effort ou du sens de braquage du volant de conduite.

Avantageusement, l'unité de traitement 23 comprend également des moyens de calcul 32 de l'accélération angulaire du moteur électrique d'assistance à partir de la mesure de la position angulaire du moteur électrique d'assistance.

Les moyens de calcul 27 du deuxième signal de commande S2 sont agencés pour calculer le deuxième signal de commande S2 en fonction du signal représentatif de l'effort résistant à la crémaillère et du signal représentatif de l'action du conducteur sur le volant de conduite du véhicule automobile.

Les moyens de détermination 28 du signal de pilotage S3 du moteur d'assistance 22 limitent la prise en compte du deuxième signal de commande S2 de façon à maintenir le signal de pilotage S3 dans un intervalle défini de part et d'autre de la valeur du premier signal de commande S1.

La largeur de l'intervalle est définie par exemple comme un pourcentage de la valeur du premier signal de commande S1.

Selon un mode de réalisation de l'invention, le système de direction assistée électrique 21 comprend un capteur de mesure de vitesse (non représenté sur la figure 2) agencé pour mesurer la vitesse longitudinale du véhicule automobile.

Selon ce mode de réalisation, les moyens de calcul 26 du premier signal de commande S1 sont de préférence agencés pour calculer le premier signal de commande en fonction de la position angulaire du moteur électrique d'assistance et de la vitesse longitudinale du véhicule automobile.

Selon ce mode de réalisation, les moyens de calcul 27 du deuxième signal de commande S2 sont avantageusement agencés pour calculer le deuxième signal de commande en outre en fonction de la vitesse longitudinale du véhicule automobile.

Selon un autre mode de réalisation de l'invention, les moyens de calcul des premier et deuxième signaux de commande et les moyens de détermination du signal de pilotage pourraient être constitués par des fonctions électroniques ou logicielles agencées dans un même processeur, ou des processeurs distincts.

Le système de direction assistée pourrait être un système de direction assistée électrohydraulique, et non entièrement électrique.

## Revendications

1. Système de direction assistée (21) de véhicule automobile comprenant :
- un moteur électrique d'assistance (22) agencé pour assister l'effort manuel exercé par un conducteur sur le volant de conduite du véhicule automobile,
- des moyens de traitement (23) agencés pour piloter le moteur électrique d'assistance (22),
- des moyens de calcul ou de mesure (24) du couple d'assistance délivré par le moteur électrique d'assistance (22),
- des moyens de mesure (25) de la position angulaire du moteur électrique d'assistance (22),
**caractérisé en ce que**
les moyens de traitement (23) comprennent des moyens de détermination (28) d'un signal de pilotage (S3) du moteur électrique d'assistance en fonction :
• d'un premier signal de commande (S1) déterminé en fonction de la position angulaire du moteur électrique d'assistance (22),
• d'un deuxième signal de commande (S2) déterminé en fonction :
o de la mesure ou du calcul de l'accélération angulaire du moteur électrique d'assistance,
o de la mesure ou du calcul du couple d'assistance délivré par le moteur électrique d'assistance (22).

2. Système selon la revendication 1, **caractérisé en ce que** les moyens de traitement (23) comprennent des moyens de comparaison de l'état dynamique théorique du moteur électrique d'assistance (22) avec l'état dynamique réel du moteur électrique d'assistance déterminé à partir de la mesure ou du calcul de l'accélération angulaire du moteur électrique d'assistance et de la mesure ou du calcul du couple d'assistance délivré par le moteur électrique d'assistance, et **en ce que** les moyens de traitement (23) comprennent des moyens de calcul (27) du deuxième signal de commande (S2) agencés pour calculer le deuxième signal de commande en fonction de la comparaison des états dynamiques théorique et réel du moteur électrique d'assistance.

3. Système selon la revendication 2, **caractérisé en ce que** les moyens de traitement (23) comprennent des premiers moyens de calcul (29) agencés pour calculer, à partir de la comparaison de l'état dynamique théorique du moteur électrique d'assistance avec l'état dynamique réel du moteur électrique d'assistance, un signal représentatif de l'effort résistant à la crémaillère.

4. Système selon la revendication 2 ou 3, **caractérisé en ce que** les moyens de traitement (23) comprennent des deuxièmes moyens de calcul (31) agencés pour calculer, à partir de la comparaison de l'état dynamique théorique du moteur électrique d'assistance avec l'état dynamique réel du moteur électrique d'assistance, un signal représentatif de l'action du conducteur sur le volant de conduite du véhicule automobile.

5. Système selon l'ensemble des revendications 3 et 4, **caractérisé en ce que** les moyens de calcul (27) du deuxième signal de commande (S2) sont agencés pour calculer le deuxième signal de commande en fonction du signal représentatif de l'effort résistant à la crémaillère et du signal représentatif de l'action du conducteur sur le volant de conduite du véhicule automobile.

6. Système selon l'une des revendications 1 à 5, **caractérisé en ce que** les moyens de détermination (28) du signal de pilotage (S3) du moteur électrique d'assistance (22) sont agencés pour limiter la prise en compte du deuxième signal de commande de façon à maintenir le signal de pilotage dans un intervalle défini de part et d'autre de la valeur du premier signal de commande.

7. Système selon l'une des revendications 1 à 6, **caractérisé en ce qu'**il comprend des moyens de mesure de vitesse agencés pour mesurer la vitesse longitudinale du véhicule automobile.

8. Système selon la revendication 7, **caractérisé en ce que** les moyens de traitement (23) comprennent des moyens de calcul (26) du premier signal de commande (S1) agencés pour calculer le premier signal de commande en fonction de la position angulaire du moteur électrique d'assistance et de la vitesse longitudinale du véhicule automobile.

9. Système selon la revendication 7 ou 8, **caractérisé en ce que** les moyens de calcul (27) du deuxième signal de commande (S2) sont agencés pour calculer le deuxième signal de commande en outre en fonction de la vitesse longitudinale du véhicule automobile.

## Claims

1. A power assisted steering system (21) for an automobile comprising:
- an electric assist motor (22) arranged to assist the manual force exerted by a driver on the steering wheel of the automobile,
- a processing means (23) arranged to control the electric assist motor (22),
- a means (24) for calculating or measuring the assist torque output by the electric assist motor (22),
- a means (25) for measuring the angular position of the electric assist motor (22),
**characterized in that**
the processing means (23) comprises a means (28) for determining a signal (S3) for controlling the electric assist motor on the basis of:
• a first operation signal (S1) determined on the basis of the angular position of the electric assist motor (22),
• a second operation signal (S2) determined on the basis of:
o the measurement or calculation of the angular acceleration of the electric assist motor,
o the measurement or calculation of the assistance torque output by the electric assist motor (22).

2. The system according to claim 1, **characterized in that** the processing means (23) comprises a means for comparing the theoretical dynamic state of the electric assist motor (22) with the actual dynamic state of the electric assist motor determined from the measurement or calculation of the angular acceleration of the electric assist motor and the measurement or calculation of the assistance torque output by the electric assist motor, and **in that** the processing means (23) comprises a means (27) for calculating the second operation signal (S2) arranged to calculate the second operation signal as a function of the comparison the theoretical and actual dynamic states of the electric assist motor.

3. The system according to claim 2, **characterized in that** the processing means (23) comprises a first calculating means (29) arranged to calculate, from the comparison of the theoretical dynamic state of the electric assist motor with
the actual dynamic state of the electric assist motor, a signal representing the force resisting the steering rack.

4. The system according to claim 2 or 3, **characterized in that** the processing means (23) comprises two calculating means (31) arranged to calculate, from the comparison of the theoretical dynamic state of the electric assist motor with the actual dynamic state of the electric assist motor, a signal representative of the driver's action on the steering wheel of the automobile.

5. The system according to all of claims 3 and 4, **characterized in that** the means (27) for calculating the second operation signal (S2) is arranged to calculate the second operation signal as a function of the signal representative of the force resisting the steering rack and the signal representative of the driver's action on the steering wheel of the automobile.

6. The system according to one of claims 1 to 5, **characterized in that** the means (28) for determining the control signal (S3) of the electric assist motor (22) is arranged to limit the taking into account of the second operation signal so as to keep the control signal in a defined interval on either side of the value of the first operation signal.

7. The system according to one of claims 1 to 6, **characterized in that** it comprises a speed measuring means arranged to measure the longitudinal speed of the automobile.

8. The system according to claim 7, **characterized in that** the processing means (23) comprises a means (26) for calculating the first operation signal (S1) arranged to calculate the first operation signal as a function of the angular position of the electric assist motor and the longitudinal speed of the automobile.

9. The system according to claim 7 or 8, **characterized in that** the means (27) for calculating the second operation signal (S2) is arranged to calculate the second operation signal also as a function of the longitudinal speed of the automobile.

## Patentansprüche

1. Servolenksystem (21) eines Kraftfahrzeugs, das umfasst:
- einen elektrischer Hilfsmotor (22), der ausgebildet ist, um die manuelle Kraft, die von einem Kraftfahrer auf das Lenkrad des Kraftfahrzeugs ausgeübt wird, zu unterstützen,
- Verarbeitungsmittel (23), die ausgebildet sind, um den elektrischen Hilfsmotor (22) zu steuern,
- Berechnungs- oder Messmittel (24) des von dem elektrischen Hilfsmotor (22) bereitgestellten Unterstützungsmoments,
- Messmittel (25) der Winkelposition des elektrischen Hilfsmotors (22), **dadurch gekennzeichnet, dass**
die Verarbeitungsmittel (23) Bestimmungsmittel (28) eines Lenksignals (S3) des elektrischen Hilfsmotors umfassen in Abhängigkeit von:
• einem ersten Steuersignal (S1), das in Abhängigkeit der Winkelposition des elektrischen Hilfsmotors (22) bestimmt wird,
• einem zweiten Steuersignal (S2), das bestimmt wird in Abhängigkeit von:
o der Messung oder der Berechnung der Winkelbeschleunigung des elektrischen Hilfsmotors,
o der Messung oder der Berechnung des von dem elektrischen Hilfsmotor (22) bereitgestellten Unterstützungsmoments.

2. System nach Anspruch 1, **dadurch gekennzeichnet, dass** die Verarbeitungsmittel (23) Vergleichsmittel des theoretischen dynamischen Zustands des elektrischen Hilfsmotors (22) mit dem tatsächlichen dynamischen Zustand des elektrischen Hilfsmotors umfassen, der ausgehend von der Messung oder der Berechnung der Winkelbeschleunigung des elektrischen Hilfsmotors und von der Messung oder der Berechnung des Unterstützungsmoments, das von dem elektrischen Hilfsmotor bereitgestellt wird, bestimmt wird, und dass die Verarbeitungsmittel (23) Berechnungsmittel (27) des zweiten Steuersignals (S2) umfassen, die ausgebildet sind, um das zweite Steuersignal in Abhängigkeit vom Vergleich des theoretischen und tatsächlichen dynamischen Zustands des elektrischen Hilfsmotors zu berechnen.

3. System nach Anspruch 2, **dadurch gekennzeichnet, dass** die Verarbeitungsmittel (23) erste Berechnungsmittel (29) umfassen, die ausgebildet sind, um ausgehend vom Vergleich des theoretischen dynamischen Zustands des elektrischen Hilfsmotors mit dem tatsächlichen dynamischen Zustand des elektrischen Hilfsmotors ein repräsentatives Signal der Kraft zu berechnen, die der Zahnstange widersteht.

4. System nach Anspruch 2 oder 3, **dadurch gekennzeichnet, dass** die Verarbeitungsmittel (23) zweite Berechnungsmittel (31) umfassen, die ausgebildet sind, um ausgehend vom Vergleich des theoretischen dynamischen Zustands des elektrischen Hilfsmotors mit dem tatsächlichen dynamischen Zustand des elektrischen Hilfsmotors ein repräsentatives Signal der Aktion des Kraftfahrers auf das Lenkrad des Kraftfahrzeugs zu berechnen.

5. System nach der Gruppe der Ansprüche 3 und 4, **dadurch gekennzeichnet, dass** die Berechnungsmittel (27) des zweiten Steuersignals (S2) ausgebildet sind, um das zweite Steuersignal in Abhängigkeit des Signals zu berechnen, das für die Kraft, die der Zahnstange widersteht, repräsentativ ist und des Signals, das für die Aktion des Kraftfahrers auf das Lenkrad des Kraftfahrzeugs repräsentativ ist.

6. System nach einem der Ansprüche 1 bis 5, **dadurch gekennzeichnet, dass** die Bestimmungsmittel (28) des Lenksignals (S3) des elektrischen Hilfsmotors (22) ausgebildet sind, um die Berücksichtigung des zweiten Steuersignal derart zu begrenzen, dass das Lenksignal in einem bestimmten Intervall auf der einen und der anderen Seite des Werts des ersten Steuersignals gehalten wird.

7. System nach einem der vorangehenden Ansprüche 1 bis 6, **dadurch gekennzeichnet, dass** es Messmittel der Geschwindigkeit umfasst, die ausgebildet sind, um die Längsgeschwindigkeit eines Kraftfahrzeugs zu messen.

8. System nach Anspruch 7, **dadurch gekennzeichnet, dass** die Verarbeitungsmittel (23) Berechnungsmittel (26) des ersten Steuersignal (S1) umfassen, die ausgebildet sind, um das erste Steuersignal in Abhängigkeit von der Winkelposition des elektrischen Hilfsmotors und der Längsgeschwindigkeit des Kraftfahrzeugs zu berechnen.

9. System nach Anspruch 7 oder 8, **dadurch gekennzeichnet, dass** die Berechnungsmittel (27) des zweiten Steuersignals (S2) ausgebildet sind, um das zweite Steuersignal weiterhin in Abhängigkeit von der Längsgeschwindigkeit des Kraftfahrzeugs zu berechnen.
